(19) Europäisches Patentamt
European Patent Office
Office européen des brevets

(11) EP 0 629 163 B1

(12) **EUROPÄISCHE PATENTSCHRIFT**

(45) Veröffentlichungstag und Bekanntmachung des Hinweises auf die Patenterteilung:
**01.05.1996 Patentblatt 1996/18**

(51) Int Cl.6: **B60T 13/58**, B60T 13/66,
B60T 10/00

(21) Anmeldenummer: **93903819.6**

(22) Anmeldetag: **23.02.1993**

(86) Internationale Anmeldenummer:
**PCT/DE93/00156**

(87) Internationale Veröffentlichungsnummer:
**WO 93/17898 (16.09.1993 Gazette 1993/22)**

(54) **FAHRZEUGBREMSE**

VEHICLE BRAKE

FREIN DE VEHICULE

(84) Benannte Vertragsstaaten:
**DE FR GB SE**

(30) Priorität: **13.03.1992 DE 4207965**

(43) Veröffentlichungstag der Anmeldung:
**21.12.1994 Patentblatt 1994/51**

(73) Patentinhaber: **ROBERT BOSCH GMBH**
**D-70442 Stuttgart (DE)**

(72) Erfinder:
• **STUMPE, Werner**
**D-7000 Stuttgart 50 (DE)**
• **WREDE, Jürgen**
**D-7000 Stuttgart 50 (DE)**

(56) Entgegenhaltungen:
**EP-A- 0 361 708          EP-A- 0 469 280**

## Beschreibung

Stand der Technik

Fahrzeugbremse mit den Merkmalen des Oberbegriffs des Anspruchs 1 sind wie z.B. aus dem Dokument EP-A-0 469 280 bekannt. Als Dauerbremse kommen z. B. die Motorbremse, Retarder oder Konstantdrosseln in Frage.

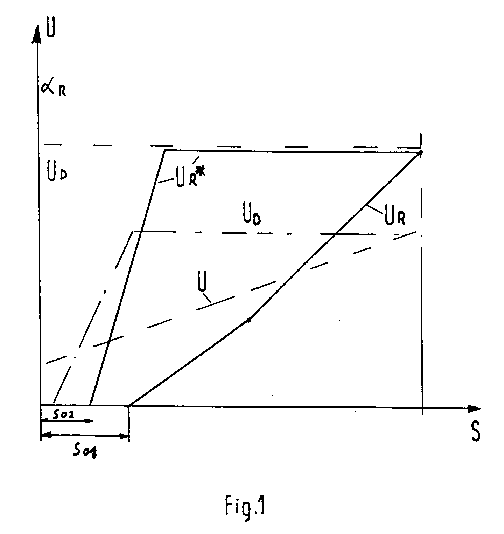

Eine elektronisch geregelte Kraftfahrzeugbremse (ELB), z.B. für Nutzfahrzeuge, weist einen elektrischen Bremswertgeber auf, der abhängig vom Betätigungsweg ein elektrisches Ausgangssignal $U$ (z.B. eine Poti-Spannung) an ein elektronisches Steuergerät abgibt. Von diesem elektrischen Ausgangssignal $U$ wird wiederum ein Sollwert $U_R$ (z.B. Druck) für die Steuerung der Reibungsbremsen und ein Sollwert $U_D$ zur Steuerung der Dauerbremsen (z.B. Motorbremse, Konstantdrossel, elektrischer oder hydrodynamischer Retarder) abgeleitet. Die Kennlinie zeigt Figur 1.

Um die Reibungsbremsen möglichst zu schonen und den Verschleiß gering zu halten, werden nun im Anfangsbereich $s_{01}$ des Betätigungswegs nur die Dauerbremsen angesteuert ($U_D$). Erst wenn deren Bremswirkung nicht ausreicht, kommen die Reibungsbremsen hinzu. Die Kennlinie der Reibungsbremsen $U_R$ ist zu Beginn auch noch relativ flach, um gute Stufbarkeit zu erreichen.

Diese Anordnung hat jedoch bei einer Schnell- oder Notbremsung den Nachteil, daß die Reibungsbremse erst relativ spät (nach $s_{01}$) zum Einsatz kommt.

Dadurch ergeben sich längere Ansprech- und Schwellzeiten, was einen längeren Bremsweg zur Folge hat.

Die Dauerbremsen reagieren so träge, daß sie bei einer Notbremsung erst verspätet wirksam werden. Außerdem ist ihre Bremswirkung begrenzt, sie ist außerdem geschwindigkeits- und drehzahlabhängig und ist nicht bis zum Fahrzeugstillstand wirksam.

Vorteile der Erfindung

Durch die Erfindung ergeben sich folgende Vorteile.

- Die Sollwertkennlinie für die Ansteuerung der Reibungsbremsen ist abhängig von der Betätigungsgeschwindigkeit

$$\frac{\Delta U}{\Delta t}$$

am Bremswertgeber.

- Bei langsamer Betätigung wird ein spätes und langsames Ansteuern der Reibungsbremse bewirkt, da zuerst die Dauerbremse zum Einsatz kommt (kein Verschleiß!).

- Bei schneller Betätigung wird ein schnelles Ansprechen der Reibungsbremsen, evtl. sogar ein Abschalten der Dauerbremsen bewirkt.

- Es ergibt sich ein kurzer Bremsweg bei integrierter Ansteuerung der Reibungs- und Dauerbremse mit einem elektrischen Bremswertgeber.

Anhand der Zeichnung wird ein Ausführungsbeispiel der Erfindung erläutert. Es zeigen

- Figur 1 verschiedene Kennlinien
- Figur 2 ein Blockschaltbild einer erfindungsgemäßen Fahrzeugbremse.

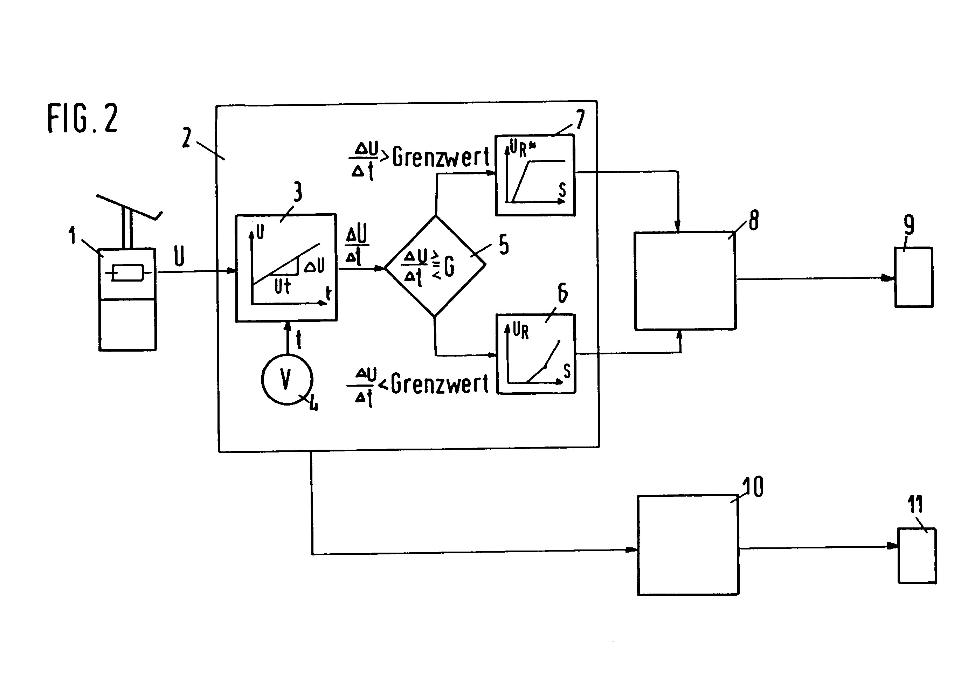

In Figur 2 ist eine elektronisch geregelte Kfz-Bremse (ELB) in einem Blockschaltbild dargestellt. Ein elektrischer Bremswertgeber, der abhängig vom Betätigungsweg $s$ ein elektrisches Ausgangssignal $U$ (z.B. Porti-Spannung) erzeugt, ist mit 1 bezeichnet und an ein elektronisches Steuergerät 2 angeschaltet. Von diesem elektrischen Ausgangssignal $U$ wird wiederum ein Sollwert $U_R$ für die Steuerung der Reibungsbremsen und ein Sollwert $U_D$ zur Steuerung der Dauerbremsen (z.B. Motorbremse, Konstantdrossel, elektrischer oder hydrodynamischer Retarder) entsprechend den Kennlinien der Figur 1 erzeugt.

Um die Reibungsbremsen möglichst zu schonen und den Verschleiß gering zu halten, werden nun im Anfangsbereich $s_{01}$ des Betätigungswegs nur die Dauerbremsen 11 (über ein Stellglied 10) angesteuert ($U_D$). Erst wenn deren Bremswirkung nicht mehr ausreicht, kommen die Reibungsbremsen 9 hinzu ($U_R$). Die Kennlinie der Reibungsbremsen $U_R$ ist zu Beginn auch noch relativ flach, um gute Stufbarkeit zu erreichen (Block 6).

Wie oben bereits erwähnt hat diese Anordnung allein jedoch bei einer Schnell- oder Notbremsung den Nachteil, daß die Reibungsbremse erst relativ spät (nach $s_{01}$) zum Einsatz kommt.

Dadurch ergeben sich längere Ansprech- und Schwellzeiten, was einen längeren Bremsweg zur Folge hat.

Die Dauerbremsen reagieren bei dieser Anordnung so träge, daß sie bei einer Notbremsung erst verspätet wirksam werden. Außerdem ist ihre Bremswirkung begrenzt, sie ist geschwindigkeits- und drehzahlabhängig und sie hält nicht bis zum Fahrzeugstillstand an.

Um diesen Zielkonflikt zwischen langsamer Betätigung zur Geschwindigkeitsanpassung und schneller Betätigung zur Notbremsung zu beheben, wird wie folgt vorgegangen:

- Im Steuergerät 2 wird aus dem zeitlichen Verlauf (Timer 4) von $U$ in einem Block 3 der Gradient $\Delta U/\Delta t$ gebildet, der ein Maß für die Betätigungsgeschwindigkeit des Bremswertgebers 1 darstellt.

- Liegt dieser Gradient $\Delta U/\Delta t$ unter einem Grenzwert G, so liegt eine "langsame Bremsung" vor. Die Entscheidung trifft ein Vergleicher 5. Dies bedeutet, die Reibungsbremse 9 wird über ein Stellglied 8 (z. B. Drucksteuerventil) nach der üblichen Kennlinie $U_R$ des Blocks 6 gesteuert, spricht also erst relativ spät an. Die Dauerbremse 11 die über das Stellglied 10 angesteuert wird, greift hier zuerst.

- Liegt der Gradient $\Delta U / \Delta t$ über dem Grenzwert G, so erkennt der Block 5 auf Schnellbremsung. In diesem Fall wird die Reibungsbremse nach der veränderten Kennlinie $U_R^*$ eines Blocks 7 gesteuert; sie spricht früher an ($s_{02}$) und steigt steiler an (s. auch Figur 1): der Bremsweg wird verkürzt.

- Bei Schnellbremsung kann die Betätigung der Dauerbremsen 11 über ein Stellglied 10 beibehalten werden (Kennlinie $U_D$). Alternativ dazu kann in diesem Fall auch die Dauerbremse 11 abgeschaltet werden, um z.B. ungewolltes Blockieren der Räder bei einer Notbremsung zu verhindern.

Da Schnellbremsungen relativ selten vorkommen, spielt der Einsatz der Reibungsbremse hier keine Rolle für den Verschleiß.

## Patentansprüche

1. Verfahren zum Betrieb einer Fahrzeugbremse enthaltend einen Bremswertgeber (1), der bei Betätigung ein vom Betätigungsweg s abhängiges Signal U erzeugt und an ein Bremsdrucksteuergerät (2) weitergibt, das seinerseits ein Stellglied (8) betätigt und einem vom Signal U abhängigen Druck an der Radbremse (9) (Reibungsbremse) einsteuert, und enthaltend eine betätigbare verschleißfreie Dauerbremse (10), dadurch gekennzeichnet, daß das Bremsdrucksteuergerät (2) die Reibungsbremse verzögert ($s_{01}$) und abhängig vom Betätigungsweg s mit relativ geringer Steigung, die Dauerbremse (11) vergleichsweise schnell und abhängig vom Betätigungsweg mit großer Steigung betätigt, daß im Bremsdrucksteuergerät festgestellt wird, wie groß der zeitliche Anstieg ($\Delta U / \Delta T$) des Signals U ist und daß bei Überschreiten eines Grenzwerts (G) durch den zeitlichen Anstieg des Signals U das Steuergerät (2) eine Betriebsart wirksam macht, bei der die Reibungsbremse schnell ($s_{02}$) und abhängig vom Betätigungsweg s mit relativ großer Steigung betätigt wird.

2. Verfahren nach Anspruch 1, dadurch gekennzeichnet, daß bei Überschreiten des Grenzwerts G die Dauerbremse (11) mit betätigt wird.

3. Verfahren nach Anspruch 1, dadurch gekennzeichnet, daß bei Überschreiten des Grenzwerts die Dauerbremse (11) unwirksam gemacht wird.

4. Verfahren nach Anspruch 1, dadurch gekennzeichnet, daß bei Überschreiten des Grenzwertes die charakteristischen Kennlinienwerte von $U_R$ ($S_{01}$ und Steigung) kontinuierlich in Abhängigkeit von $\Delta U / \Delta t$ zu schnellerer Bremsung verschoben werden.

5. Verfahren nach Anspruch 1 oder Anspruch 4, dadurch gekennzeichnet, daß der Einbremsbeginn ($S_{01}$) verschoben wird.

6. Verfahren nach Anspruch 1 oder Anspruch 4, dadurch gekennzeichnet, daß die Steigung von $U_R$ verändert wird.

## Claims

1. Method of operating a motor vehicle brake containing a braking value pick-up (1) which, during actuation, generates a signal U which depends on the actuation path s and relays it to a brake pressure control unit (2), which in turn actuates an actuator (8) and feeds a pressure dependent on the signal U to the wheel brake (9) (friction brake), and containing an actuable wear-free sustained-action brake (10), characterized in that the brake pressure control unit (2) actuates the friction brake with a delay ($s01$) and with a relatively small slope as a function of the actuation path s but actuates the sustained-action brake (11) relatively rapidly and with a large slope as a function of the actuation path, in that a determination is made in the brake pressure control unit of how large the rise ($\Delta U / \Delta T$) of the signal U is with respect to time, and in that when a limiting value (G) is exceeded by the rise of the signal U with respect to time, the control unit (2) makes a type of operation effective in which the friction brake is actuated rapidly ($s02$) and with a relatively large slope as a function of the actuation path s.

2. Method according to Claim 1, characterized in that the sustained-action brake (11) is also actuated when the limiting value G is exceeded.

3. Method according to Claim 1, characterized in that the sustained-action brake (11) is made ineffective when the limiting value is exceeded.

4. Method according to Claim 1, characterized in that the characteristic values of $U_R$ ($S_{01}$ and slope) are continuously displaced to more rapid braking as a function of $\Delta U / \Delta T$ when the limiting value is exceeded.

5. Method according to Claim 1 or Claim 4, characterized in that the beginning of braking ($S_{01}$) is displaced.

**6.** Method according to Claim 1 or Claim 4, characterized in that the slope of $U_R$ is changed.

## Revendications

**1.** Procédé pour faire fonctionner un freinage de véhicule automobile contenant un détecteur de valeur de freinage (1) qui, lors de l'actionnement, produit un signal U fonction de la distance d'actionnement s et le transmet à un appareil de commande de pression de freinage (2) qui de son côté actionne un vérin (8) et applique une pression, qui est fonction du signal U, aux freins de roues (9) (freins à friction) en retenant un frein à régime continu (10) qui peut être actionné sans usure, procédé caractérisé en ce que l'appareil de commande de pression de freinage (2) retarde le freinage à friction (sO1) et actionne avec une croissance relativement faible les freins à régime continu (11) de façon relativement rapide et, en fonction de la distance d'actionnements, les actionne avec une grande croissance de telle sorte que l'on détermine dans l'appareil de commande de pression de freinage quelle est la grandeur de la croissance dans le temps ($\Delta U/\Delta T$) du signal U et qu'en cas de dépassement d'une valeur limite (G) de croissance dans le temps du signal U, l'appareil de commande (2) rend opérationnel un type de fonctionnement dans le cas duquel les freins à friction sont actionnés rapidement (sO2) et avec une croissance relativement grande en fonction de la distance d'actionnement s.

**2.** Procédé selon la revendication 1, caractérisé en ce qu'en cas de dépassement de la valeur limite G, on actionne les freins à régime continu (11) en même temps.

**3.** Procédé selon la revendication 1, caractérisé en ce qu'en cas de dépassement de la valeur limite, le freinage en régime continu (11) cesse d'être opérationnel.

**4.** Procédé selon la revendication 1, caractérisé en ce qu'en cas de dépassement de la valeur limite, on déplace les valeurs caractéristiques de la ligne caractéristique de $U_R$ ($S_{O1}$ et la pente) de façon continue en fonction de $\Delta U/\Delta t$, vers un freinage plus rapide.

**5.** Procédé selon la revendication 1 ou la revendication 4, caractérisé en ce que l'on repousse le début du freinage ($S_{O1}$).

**6.** Procédé selon la revendication 1 ou la revendication 4, caractérisé en ce que l'on modifie la pente de $U_R$.

Fig.1

FIG. 2

EP 0 629 163 B1